# EUROPEAN PATENT APPLICATION

(11) **EP 3 943 465 A1**
(43) Date of publication of application: **26.01.2022**
(21) Application number: 20760311.9
(22) Date of filing: 08.02.2020
(51) Int. Cl.: C04B 20/06, C03B 19/08, F27B 1/09

(54) **METHOD FOR PRODUCING HOLLOW GRANULES FROM INORGANIC RAW MATERIAL AND DEVICE FOR IMPLEMENTING SAME**

(30) Priority: 21.02.2019 RU 2019104940
(71) Applicant: OBSHCHESTVO S OGRANICHENNOJ OTVETSTVENNOSTYU "URALNIPINEFT", Ekaterinburg, 620100 (RU)
(72) Inventor: TSYPKIN, Evgenij Borisovich, Ekaterinburg, 620014 (RU); TITOV, Anatolij Gennadevich, Ekaterinburg, 620086 (RU)
(74) Representative: Sloboshanin, Sergej
(86) International application number: PCT/RU2020/050014
(87) International publication number: WO 2020/171741

(57) **Abstract**

The invention relates to the field of production of light-weight hollow granules from a powdered mineral or synthetic raw material for use in the manufacturing of composite polymer products, lightweight construction materials, thermal insulation of pipelines, frostresistant plasters, and other kinds of building materials.

The invention relates to the field of production of light-weight hollow granules from a powdered mineral or synthetic raw material for use in the manufacturing of composite and thermal insulating articles. A method for producing hollow granules comprises feeding a powdered mineral raw material into a vertical furnace which consists of a furnace shell (1), in the cavity of which an active zone is arranged, said zone being flared towards the bottom and formed from hollow elements (2), preferably cylinders, which are mounted coaxially on each other with a clearance (8) between them and the shell. Between the adjacent hollow elements (2) there are gaps (3) formed between the outer wall of the upper hollow element and the inner wall of the lower hollow element. The active zone is provided with autonomous heating elements (7) which are electrically connected to a control system. Air is supplied by means of a fan (6) into a powder dispenser (4) where said air is mixed with a mineral powder to be fed into the furnace, and into the clearance zone (8) via which the air stream is blown into the gaps (3). The air intended to be supplied into the powder dispenser (4) and the clearance (8) is preheated in an air heater (9). A stream of hollow granules exiting the active zone is cooled in a collector (10) arranged in the shell (1) and connected to a cyclone 12 via a mixer 11.

The technical result is the possibility of expanding inorganic particles to a size of 1-250 µm including extremely small particles (smaller than 50-75 µm); preventing the said particles from sticking to the furnace walls, obtaining the hollow lightweight granules with intact walls, bulk density up to 500 kg/m3, compression strength from 0.1 to 40 MPa, and with granule sizes from 1 to 500 µm.The technical result is the possibility of expanding particles to a size of 1-250 µm and of preventing said particles from sticking to the furnace walls.

## Description

### TECHNICAL FIELD

The invention relates to the field of production of lightweight hollow granules from a powdered mineral or synthetic raw material for use in the manufacturing of composite polymer products, lightweight construction materials, thermal insulation of pipelines, frostresistant plasters, and other kinds of building materials.

### PRIOR ART

There is a known method for producing hollow microspheres (patent RU 2586128 C2, published on June 10, 2016), which includes the preparation of an aqueous suspension using the preliminarily obtained glass melt, spray drying, and sintering the granulated material.

The disadvantage of this method involves the use of water for the manufacturing process which requires an additional stage of drying that leads to increased energy consumption.

There is a known method for producing hollow microspheres (patent RU U 2664990 C1, published on August 24, 2018), which includes feedstock grinding, separation of a narrow fraction, and spherolization at 400-1800 °C.

The disadvantage of this method involves the use of the atmosphere of inert gases (nitrogen, helium), as well as the necessity to maintain pressure from 0.01 to 0.1 MPa in a spherolization furnace; therefore, it requires increased energy consumption.

There is a known method for producing a microspheric filler on the basis of expanded perlite (patent RU 2534553 C1, published on November 27, 2014). According to this method, raw perlite ore undergoes heat treatment at 300-350°C. Then it is ground with the simultaneous addition of a carbon-contained fluid, for example, propylene glycol, glycerin, triethanolamine, and glass-forming additives such as fluorides, lithium, strontium, boron, zinc compounds, or their combinations. The final stage includes ore expansion in a fluidized-bed furnace.

The disadvantage of this method involves the necessity of fine-grinding a glass-forming additive (smaller than 2 microns) and the impossibility to obtain granules with isolated porosity. The mentioned method requires increased energy consumption and does not ensure the required quality of the final product.

There is a known method for producing expanded perlite (Invention certificate SU 1145002 A, published on March 15, 1985). To begin with, perlite ore is ground, then it undergoes preliminary heat treatment at 300-500 °C within 3-5 minutes in saturated steam, which causes structural changes in the raw material.

The disadvantage of this method is the impossibility to obtain granules with solid walls and isolated porosity.

There is a known method for producing a grain-shape raw material (patent US2017107147A1, published on March 5, 1985). According to this method, the air is partially entrapped from the upper part and supplied into the lower part of the pit-type furnace to provide stream uniformity.

The disadvantage of this method involves problems with launching the furnace and the impossibility to ensure its stable operation until the furnace chambers are completely filled with the expanded material.

There is a known method for the production of grain-shaped raw material (patent AT512271A2, published on June 15, 2013). According to this method, the particles of the raw material undergo preliminary heat treatment in the field of ultra-high frequency currents, and the final heat treatment is performed in a fluidized-bed furnace.

The disadvantage of this method involves a complicated design and complexity in regulating the level of the preheating rate.

There is a well-known device for producing a dry construction mixture on the basis of expanded perlite (patent RU 2502594 C1, published on December 27, 2013). The mentioned device includes a vertical pit-type furnace, expansion coupling, turbo cyclone gas burner, raw material feeding nozzles, air feeding nozzles, and mixing unit. The raw material in this furnace is expanded when moving upward and caught by means of a filter.

The disadvantage of the furnace design involves immediate heating of the particles of the raw material, which causes a thermal shock. The walls of the particles crack, and the final product is obtained with open porosity.

There is a known method and device for producing expanded granules from a powdered perlitic raw material in a vertical electric furnace (patent WO2016191788A1, published on December 8, 2016). A shaft of the furnace is divided into heating zones, and each heating zone operates autonomously. The temperature of each heating zone is controlled independently. Perlitic raw material, pre-dispersed by the air, is transported within the shaft of the vertical furnace by means of compressed air, which is supplied from the bottom, with the formation of a mixture stream. The latter is transported along the shaft axis through several vertically separated heating zones. During transportation, it heats up to a critical temperature, and the surface of the perlite raw material transforms due to expansion in the upper part of the way; the stream of the mixture exiting the shaft is cooled by air, and the solid fraction is separated by means of a filter.

The device for expanding perlite ore consists of a vertical furnace with a shaft, which is provided with upper and lower ends, in the lower part of the furnace it contains at least one perlite raw material feeding device, a nozzle for solid substance/air, to which compressed air is injected and the perlite raw material is fed and then dispersed; the shaft of the furnace contains multiple vertically divided heating zones, through which the mixture of the perlite raw material and compressed air stream pass; each heating zone contains temperature control elements and at least one individually controlled heating element to heat the stream of the mixture to a critical temperature. The upper end of the furnace shaft is connected to a cooled air supply unit at the outlet of the shaft. The line of cooled air stream transportation is provided with a filter for separation of the solid fraction of the expanded perlite and units for measuring the size and density of the obtained product.

The disadvantage of this method involves the impossibility to expand particles smaller than 50-75 µm due to their sticking to the walls, formation of agglomerates, and clogging of the operating channel of the furnace when it operates continuously. It causes additional expenses and the impossibility to obtain a mineral powder with the required properties.

The method closest to the proposed one is the expansion of the raw inorganic material in the form of sand. Grains of the expanded material are fed downward into the channel of the vertical furnace shaft; the descending stream of the raw material undergoes heat treatment by heating to the required temperature of the heating elements on the walls of the furnace shaft. Then the stream enters the collector in the lower part of the furnace shaft from which it is transported to the cyclone for separation of the solid fraction (WO 2015/184482, published on December 10, 2015).

The device closest to the proposed one is designed to perform the mentioned method. This device consists of a vertical furnace containing the active zone which is designed as a cylindrical shaft with walls provided with heating elements. A loading unit for raw material in the form of sand is in the upper part of the furnace, and an expanded granules collecting unit designed as a collector connected to a gas cyclone via a pneumatic transport is in the lower part of the furnace. It is used to extract the final product (WO 2015/184482, published on December 10, 2015).

The disadvantage of this method involves the impossibility to expand particles smaller than 50-75 µm due to their adhesion to the walls, formation of agglomerates, and clogging of the operating channel of the furnace when it operates continuously. It causes clogging of the shaft walls and problems with the removal of the expanded material from the furnace. In addition, the mentioned drawbacks cause additional costs for maintenance of the furnace and do not ensure obtaining hollow granules with the required parameters.

### DISCLOSURE OF THE INVENTION

The technical problem to be solved by this invention is to ensure the expansion of inorganic particles of mineral and synthetic raw materials to a size of 1-250 µm including extremely small particles (smaller than 50-75 µm); preventing the said particles from sticking to the furnace walls, obtaining the hollow lightweight granules with intact walls, bulk density up to 500 kg/m³, compression strength from 0.1 to 40 MPa, and with a granule size from 1 to 500 µm.

The problem can be solved due to the claimed method for producing hollow granules by heat treatment of a powdered inorganic raw material in a vertical furnace with an active zone that can be heated; the powdered inorganic raw material and air are preliminarily mixed to form a dispersed mixture which is fed downward into the active zone; the stream exiting the active zone is cooled, and the obtained hollow granules are separated from the gaseous phase; the method is characterized in that the dispersed mixture stream is fed into the active zone, which expands in the direction of the mixture stream transportation and has a variable section; the active zone is divided into heating zones, and each heating zone heats the mixture stream autonomously; the temperature of each heating zone is controlled independently; in the upper part of the active zone, the stream undergoes heat treatment that provokes widening of the particles of the inorganic raw material resulting in the formation of hollow granules; in the central and lower parts of the active zone, the stream of the heated mixture undergoes heat treatment, and the air is supplied forcibly at the height of the active zone through the heating zones in such a way as to ensure its movement from up to down within the areas adjacent to the inner walls of the active zone.

The claimed method can be performed by means of a vertical furnace, consisting of a shell with an active zone; there are feeding units at the entrance to the active zone; they are connected to a disperser where the powdered inorganic raw material and air are mixed to be fed into the active zone provided with heating elements; there is a collector with a cooling device connected to a separation unit at the outlet; the cooling device is used to cool the mixture, and the separation unit is used to separate the solid fraction; the device is characterized in that the active zone consists of multiple heating zones and each of them has at least one individually controlled heating element; the active zone is made of metal hollow elements; hollow elements have different linear dimensions of the section, and they are mounted coaxially on each other in such a way that each upper hollow element has a smaller dimension of the section than the dimension of the section of the adjacent lower hollow element; there are gaps between the walls of the adjacent hollow elements used for the forced air supply into the active zone; the outer walls of the hollow elements are in the shell cavity with a clearance directed towards the inner wall of the shell to provide the forced air supply to the active zone.

In addition, this method can be performed by means of simultaneous application of several claimed devices having a common feeding system for powdered inorganic raw materials and operating independently of each other. This approach ensures the uniform distribution of powdered raw materials and stability of the heat treatment process in each device, which ensures a high yield of hollow granules (expanded inorganic particles) and quality improvement.

Air for dispersing the powdered inorganic raw material is supplied to the disperser in the upper part of the vertical furnace by means of a fan. The air supplied by a fan is distributed along two transport pipelines: into the disperser and into the gap between the inner wall of the shell and the walls of the hollow elements forming the heating zones. The stream rates can be controlled with valves installed on the transport air pipelines. The power of a fan is chosen to ensure the directed air stream through the disperser along the axis of the vertical furnace into the active zone, as well as into the gap between the outer walls of the heating zones and the inner walls of the shell. The well-known fans VTs 14-46, VTsP 6-46, VR 100-45, or VRP-115-45 can be used for this purpose.

The powders of perlite, vermiculite, synthetic silicate, and aluminosilicate materials are used as powdered inorganic raw materials.

The ores from the following deposits (but not limited to): Mukhor-Talinskoe deposit (Buryatia), Fogosh (Ukraine), Aragatskoe deposit (Armenia), Bilesik (Turkey), Paravanskoe (Georgia) can be used as perlite raw materials. The approximate chemical composition of the perlites includes (but not limited to): SiO₂ 50-85%, Al₂O₃ 8-20%, K₂O 0-5%, Na₂O 0-5%, Fe₂O₃ 0-3%, MgO 0-1%, CaO 0-2%, H₂O 2-6%.

Ores from the following deposits (but not limited to): Kovdorskoe deposit (Kola Peninsula, Russia), Vishnevogorskoe deposit (Chelyabinsk region, Russia), Kulantauskoe deposit (Kazakhstan), Karakalpakia deposit (Uzbekistan) can be used as vermiculite raw materials. The approximate chemical composition of the vermiculites includes (but is not limited to): SiO₂ 33-35%, Al₂O₃ 6-20%, Fe₂O₃ 5-7%, FeO 1-10%, MgO 19-25%.

Artificially welded glasses, granulates of dispersed particles, powders obtained by means of a sol-gel method, with a possible chemical composition: SiO₂ 30-85%, Al₂O₃ 0-20%, B₂O₃ 0-20%, Fe₂O₃ 0-5%, FeO 0-1%, SO₃ 0-3%, MgO 0-10%, CaO 0-9%, K₂O 0-5%, Na₂O 0-20% can be used as silicate and aluminosilicate raw materials.

The feeder supplies the powdered inorganic raw material into the disperser where it is mixed with air supplied by a fan. Any containers operating on the principle of Venturi tubes and having two inlet ducts and one outlet duct can be used as dispensers, for example, the commercial dispersers PST DSMG-25, Zitrek IM-30, or APN-50M.

The mixture of air and powdered inorganic raw material, supplied from the disperser to the upper part of the active zone, undergoes heat treatment. If necessary, the process can be stopped as follows: stop the feeding of the raw material, then stop the electric heating of the active zone, and stop the air supply into the gaps in the heating zones of the active zone.

The heat treatment of the mixture of air and the powdered inorganic raw material moving through the autonomous heating zones causes the expansion of the particles of the inorganic raw material and the formation of hollow lightweight granules.

The active zone is formed by the heating zones, and each heating zone is represented by metal hollow elements. The hollow elements are mainly cylinders of different diameters. Hollow elements can be square or polygonal in their section. Heat-resistant steel, for example, 10Kh23N18, 15Kh25T, or any other kind of steel capable to withstand temperatures up to 1200 °C can be used for producing hollow elements of the active zone. The hollow elements are rigidly connected to the cavity of the shell of the vertical furnace in such a way that the hollow element with the largest section is installed in the lower part of the active zone, and the hollow cylinder with the smallest section is installed in the upper part of the active zone. The hollow elements are mounted coaxially on each other in such a way that there is a gap for the air supplied by a fan between the outer wall of the lower hollow element and the inner wall of the upper hollow element. Each hollow element is provided with autonomous controlled heating units, for example, resistor elements made of nichrome, kanthal, or other alloys with high electrical resistance. The temperature of each heating zone is controlled with an individual control system electrically connected to the heating elements of the hollow elements.

The active zone has a clearance directed towards the inner walls of the shell of the vertical furnace, the clearance width varies from 1 to 15 mm. The shell of the vertical furnace is made of refractory material such as fireclay bricks.

The active zone of the vertical furnace expands downward. Due to this design, the stream rate decreases during transportation downward. The stream temperature in the lower part of the active zone reduces due to regulation of the heating zones and due to air passing through the gaps of the heating zones.

After leaving the active zone, the stream of hollow lightweight mineral granules suspended in the air is mixed with the cold atmospheric air to cool the obtained lightweight granules in a mixer. The mixer operates on the principle of an injection chamber, which receives supplied cold atmospheric air from the periphery, and the mixture from the active zone streams through the center. The amount of air for cooling is calculated on the basis of the temperature in the active zone, the concentration of the aerosol, and the temperature of the hot air supplied into the disperser. Then, the cooled aerosol enters the cyclone where solid particles are separated from the gaseous phase. Hereinafter, aerosol means a dispersed system consisting of solid particles of the powdered raw material, or the product and gas (for example, air, nitrogen, flue gases). Any suitable commercially produced device can be used as a cyclone.

Comparing the proposed method and device to perform it with the known methods and devices, we can conclude that the "novelty" and "inventive step" are achieved.

The characteristic features of the proposed method are that the active zone expands downward and has a variable section; the independent air is blown into the active zone through the heating zones in such a way as to ensure its directed stream downward in the areas adjacent to the inner walls of the active zone; autonomous heating of heating zones with setting independent heat treatment modes in each heating zone, as well as the corresponding design of the device or system of the connected devices required to perform the proposed method. In combination with other features, these characteristic features ensure achievement of a new technical result such as providing expansion of the inorganic mineral and synthetic particles with sizes of 1-250 µm, as well as extremely small particles smaller than 50-75 µm by preventing them from sticking to the walls when obtaining hollow lightweight granules with intact walls, bulk density up to 500 kg/m³ with the compressive strength from 0.1 to 40 MPa, and granule dimensions from 1 to 500 µm; the continuity of the process is provided as the efficiency is increased and the repair interval is extended due to prevention of the heat treatment products from sticking to the walls of the active zone.

The compressive strength means a threshold value of the hydrostatic pressure resulting in the product destruction (GOST R 57963-2017).

### THE MOST OPTIMAL OPTIONS OF INVENTION UTILIZATION

The declared method and device required for this method can be realized as follows (but not limited to):

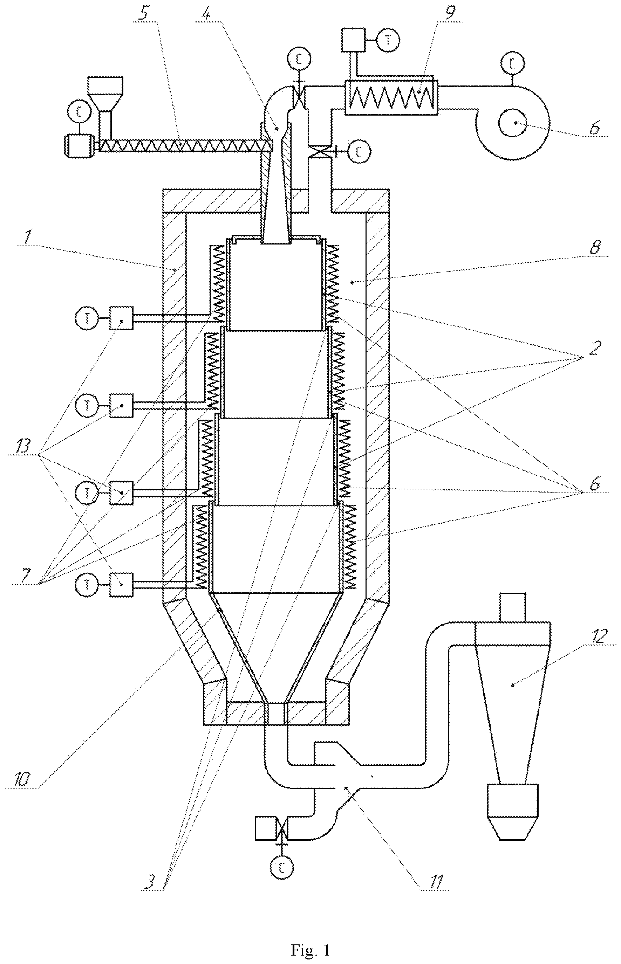

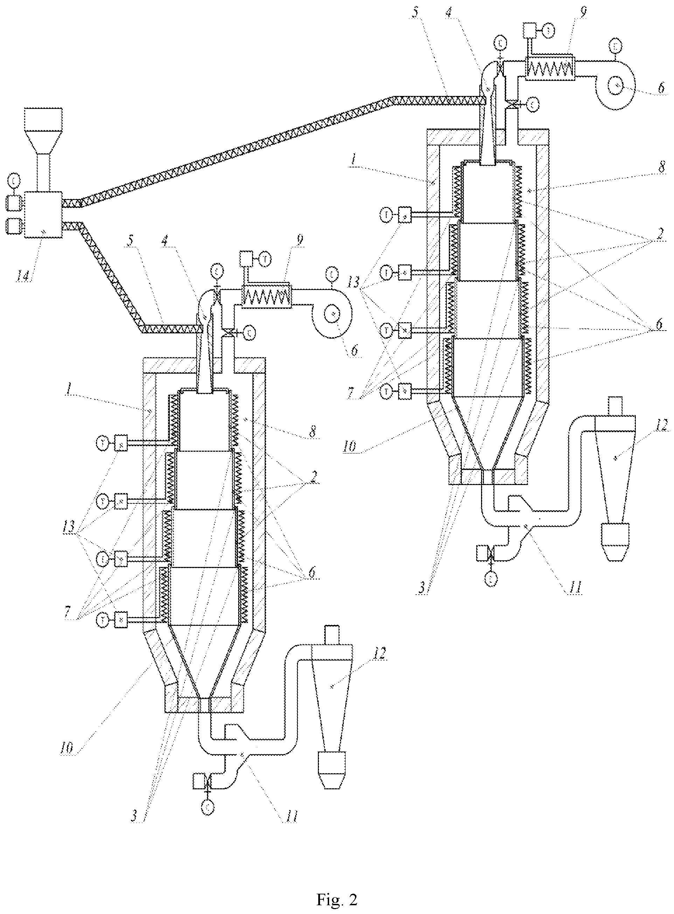

Fig. 1 shows the description of the device and schematic presentation of the vertical furnace design. Fig. 2 shows the connection diagram of two vertical furnaces operating from a single unit for feeding powdered inorganic raw material.

The device for the production of hollow lightweight granules consists of a supporting shell (1) of the vertical furnace made of refractory bricks with the active zone formed by the hollow elements shown in Fig. 1 and Fig. 2, which are the cylinders (2) with variable sections mounted coaxially on each other in such a way that the active zone expands downward, and there are gaps between the adjacent cylinders (3) which are formed by the outer wall of the upper cylinder and inner wall of the lower cylinder. The entrance to the active zone comprises a disperser (4) with a filler neck for feeding the powdered inorganic raw material by means of the screw conveyor (5), a tapered sleeve for supplying air by a fan (6), and a diffuser for supplying the dispersed mixture into the active zone. Cylinders (2) are equipped with autonomous heating elements (7) electrically connected to the control systems (13). The cylinders (2) are rigidly connected to the shell cavity (1) with a clearance (8) between the outer walls of the cylinders (2) and the inner wall of the shell (1). The upper part of the gap area (8) comprises a sleeve connected to a fan (6) to blow air. The tapered sleeve of the disperser (4) and input air sleeve installed in the upper part of the gap area (8) are equipped with shut-off elements, in particular, screw valves. Air, which enters a disperser (4) and to the sleeve in the clearance zone (8), is preliminarily heated in an air heater (9). The collector (10) is connected to the cyclone (12) via a mixer (11).

The powdered raw material feeding unit (14) is used to connect two vertical furnaces (Fig. 2). This unit independently and consistently feeds a powdered inorganic raw material into both furnaces with an identical design (Fig. 1).

The claimed method can be performed as follows.

The required fraction of the powdered raw material, for example, perlite is fed by means of a screw conveyor (5) into a disperser (4) operating on the principle of Venturi tube. The air blown by means of a fan (6) passes through the variable section of the tapered tube of the disperser (4), and the powdered inorganic raw material dispersed with the turbulent air supplied by the fan (6) is fed into a filler neck of the disperser (4). The obtained aerosol from the diffuser of the disperser (4) with the particles evenly distributed within the stream enters the upper part of the active zone of the shell (1) where the raw material is thermally treated, while the aerosol stream passes through the active zone downward. The active zone comprises a row of cylinders (2) with variable sections made of heat-resistant steel capable to withstand up to 1200 °C. Each cylinder (2) is equipped with the heating elements (7) made, for example, of nichrome, and it heats up to the required temperature which is under the individual control system 13. The heating of the cylinders (2) occurs due to the heat generated by the resistor elements with high electrical resistance. Each cylinder (2) is heated from the outside by the heating elements (7), and the temperature of each cylinder (2) is controlled independently. This is necessary to ensure the uniformity of the temperature field throughout the whole height of the active zone. Besides, this makes it possible to regulate the maximum temperature range to provide efficiency of the heat treatment.

The aerosol stream sequentially passes through the heating zones along the axis of the active zone toward a collector (10). The air supplied by a fan (6) to the clearance zone (8) with a preferred size from 1 to 15 mm is additionally heated in the corresponding heating zone, while passing downward. Then it is blown into the active zone through the gaps (3) and the trajectory of the incoming heated air is set by gaps (3). It means the air passes nearby the inner walls of the heating zones. In the clearance zone (8), the air is heated to the temperature of 300 to 600 °C and its stream rate is 0.01 to 0.2 m/s. The air blowing through the gaps (3) prevents an extremely small fraction (smaller than 75 µm) from sticking to the walls of the active zone. A stream of hollow granules exiting the active zone enters a collector (10) and then passes through a mixer (11) where it is mixed with the cold atmospheric air to cool the obtained lightweight granules. Then, the cooled stream enters a cyclone 12, where hollow lightweight granules are caught. The purified waste gases are released into the atmosphere.

Hollow lightweight granules with the required characteristics can be obtained due to this method. The characteristics of the obtained hollow lightweight granules are presented in Table 1.

Examples 1-3 demonstrate the application of the natural perlitic raw material, the examples 4-6 demonstrate the application of the natural vermiculite raw material. Example 7 demonstrates the application of the artificial raw material (the welded glass with the following chemical composition: SiO₂ 65.0%, B₂O₃ 15.0%, Fe₂O₃ 2.5%, SO₃ 0.5%, MgO 1.0%, CaO 3.5%, K₂O 2.5%, Na₂O 10.0%.). Example 8 demonstrates the application of the artificial raw material (a granulate with the following composition: quartz (SiO₂) 70.0%, boric anhydride (B₂O₃) 18.5%, ferric sulfate (III) (Fe₂(SO₄)₃) 3.5%, water for granulation (H₂O) 8.0%). Example 9 demonstrates the application of the artificial raw material (a granulate with the following composition: quartz (SiO₂) 20.0%, kaolinite (Al₂O₃ 39.5%, SiO₂ 46.5%, and H₂O 14%), crystallized aluminum sulphate (Al₂(SO₄)_{3·}18H₂O) 5.0%, water for granulation (H₂O) 10.0%).

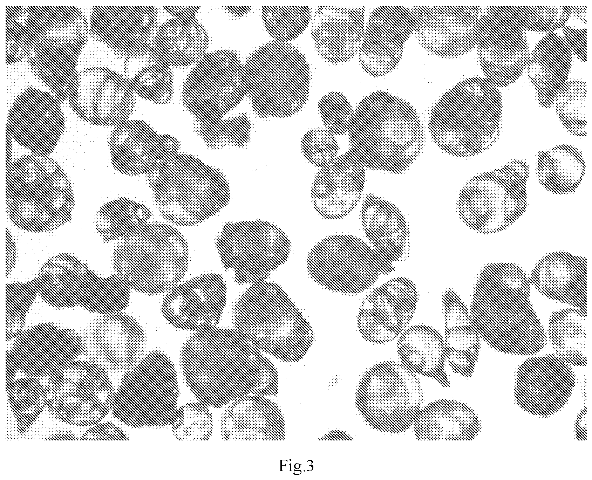

The granules obtained by this method consist of microbubbles with almost intact walls. The photos of the obtained hollow granules are shown in Figs. 3-7.

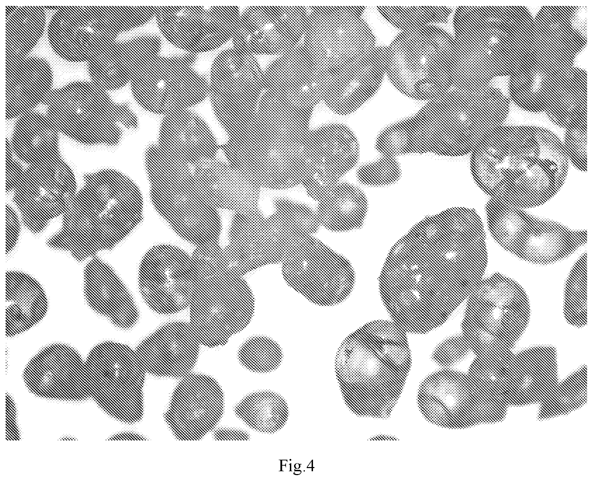

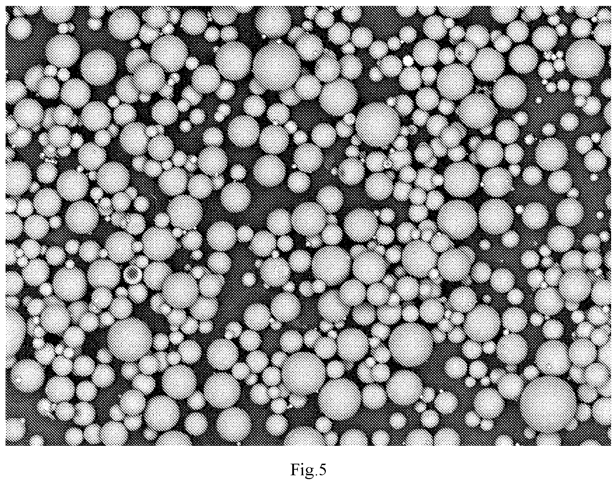

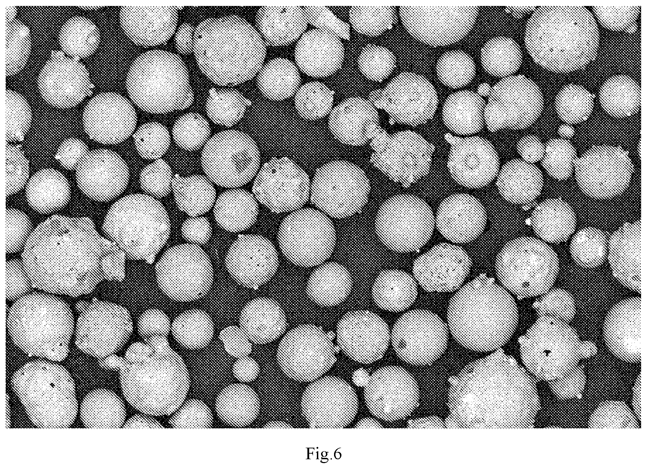

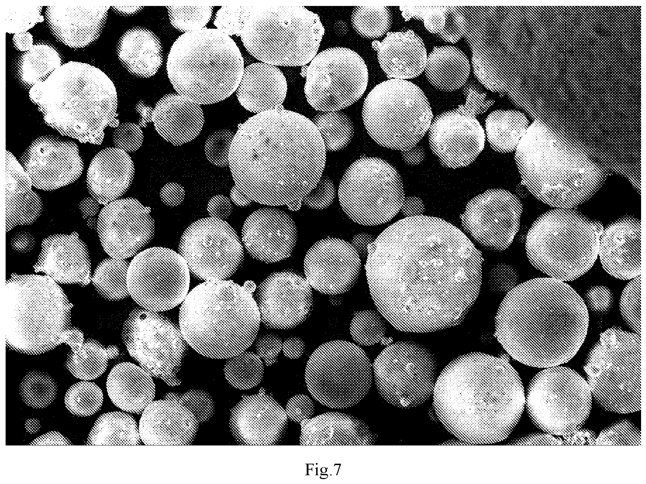

Fig. 3 demonstrates a micro photo of the particles of expanded perlite from the deposit Mukhor-Tala, Russia. The shape of the particles is round. The particles are mainly glued polidified bubbles with an intact wall. Fig. 4 demonstrates the micro photo of the particles of expanded vermiculite from the deposit Kovdor, Russia. The structure of the granules can be identical to the granules from example No. 1. According to example 7, Fig. 5 demonstrates the micro photo of the granules made of borosilicate glass. The granules have an almost perfect spherical shape with a distinct solid wall. Figs. 6 and 7 demonstrate the micro photo of the particles of the product made of borosilicate and aluminosilicate granulates. The granules are similar in shape and structure to the granules in example 7, but the quality of the walls in both cases is slightly worse than that of the granules in example 7.

### INDUSTRIAL APPLICABILITY

Application of the claimed method and the device for implementing the same ensure the efficient heat treatment of inorganic powdered raw material with expanding inorganic particles to a size of 1-250 µm including extremely small particles (smaller than 50-75 µm) with the formation of hollow lightweight granules with intact walls, bulk density up to 500 kg/m³, compression strength from 0.1 to 40 MPa, and with a granule size from 1 to 500 µm. The claimed method and device for implementing the same ensure a continuous process with required productivity, a long repair interval due to a directional air supply into the active zone that prevents the mineral particles from sticking to the walls and, therefore, excluding fouling of the walls of the active zone.

**Table 1. The characteristics of the hollow granules obtained by the claimed method**

| No. | Initial material and location | Real density of the raw material, kg/m³ | Burning temperature in the active zone, °C | Bulk density of the expanded product, kg/m³ | Hydrostatic compression strength σ 10%, atm. | Median diameter of the particles of the expanded product, µm |
|---|---|---|---|---|---|---|
| 1 | Perlite (Mukhor-Taly, Russia) | 2330 | 750 | 384 | 37.0 | 145 |
| 2 | Perlite (Izmir, Turkey) | 2375 | 750 | 375 | 29.4 | 151 |
| 3 | Perlite (Paravan, Georgia) | 2355 | 750 | 396 | 31.7 | 154 |
| 4 | Vermiculite (Kovdor, Russia) | 2450 | 800 | 363 | 12.5 | 220 |
| 5 | Vermiculite (Vishnevogorsk, Russia) | 2510 | 800 | 370 | 14.7 | 169 |
| 6 | Vermiculite (Kulantauskoe, Kazakhstan) | 2550 | 800 | 392 | 13.5 | 243 |
| 7 | Borosilicate glass | 2250 | 1250 | 390 | 120.0 | 92 |
| 8 | Borosiloicate granulate | 2100 | 1250 | 385 | 85.0 | 100 |
| 9 | Aluminosilicate granulate | 2130 | 1250 | 375 | 73.5 | 103 |

## Claims

1. A method for obtaining hollow granules by heat treatment of powdered inorganic raw material in a vertical furnace with an active zone in its cavity which can be heated, **characterized in that** the powdered inorganic raw material is preliminarily mixed with air to form a dispersed mixture, which is fed forcefully downward to the active zone; the stream exiting the active zone is cooled, and the obtained hollow granules are separated from the gaseous phase; the stream of the dispersed mixture is supplied into the active zone, which expands along the direction of the mixture stream transportation and has a variable section; the active zone is divided into heating zones in such a way that each heating zone heats the mixture stream independently from the other ones and temperature in each heating zone can be controlled autonomously; in the upper part of the active zone, the mixture stream is heated in such a way that the particles of inorganic raw materials expand with the formation of hollow granules; then the pre-heated mixture undergoes heat treatment in the central and lower parts of the active zone; additionally, the air is supplied throughout the height of the active zone through the heating zones in such a way as to ensure the air movement downward in the areas adjacent to the inner walls of the active zone.

2. The method according to claim 1 **characterized in that** perlite, vermiculite, synthetic silicate, or aluminum silicate materials can be used as powdered inorganic raw materials.

3. The method according to claim 1 **characterized in that** the air stream used for the forced blowing through the heating zones is supplied through a 1-15 mm clearance between the active zone and shell of the vertical furnace.

4. The method according to claim 1 **characterized in that** the air stream used for blowing it through the heating zones and dispersing a powdered inorganic raw material is heated.

5. The method according to claim 1 **characterized in that** the air stream used for forced blowing through the heating zones is preliminarily heated to 300-600 °C.

6. The method according to claim 1 **characterized in that** the air stream used for forced blowing through the heating zones is supplied at 0.01 to 0.2 m/s.

7. The method according to claim 1 **characterized in that** the active zone is made of heat-resistant steel.

8. A device for obtaining hollow lightweight granules comprising at least one vertical furnace consisting of a shell with an active zone, **characterized in that** the entrance of the active zone is provided with feeding units for powdered inorganic raw material and air, connected to a powder dispenser where the components are mixed to be fed into the furnace provided with heating elements; the exit of the active zone is provided with a collector and a cooling device installed at the outlet of the collector; the cooling device is connected to a solid fraction separation unit; the active zone consists of multiple heating zones, and each heating zone comprises at least one independently controlled heating element; the active zone is made of hollow metal elements with different linear section sizes, which are mounted coaxially on each other in such a way that the section of each upper hollow element is smaller than the section of the adjacent lower hollow element, and there are gaps between the walls of the adjacent hollow elements for blowing air into the active zone; outer walls of the hollow elements are in the cavity of the shell with a clearance directed toward the inner wall of the shell to provide the supply of the air into the active zone.

9. The device according to claim 8 **characterized in that** the vertical furnaces are connected to each other via the feeding unit for powdered raw material.

10. The device according to claim 8 **characterized in that** the shell of the vertical furnace is made of refractory bricks.

11. The device according to claim 8 **characterized in that** the hollow elements are made of fire-resistant steel.

12. The device according to claim 8 **characterized in that** the hollow elements are represented as cylinders.

13. The device according to claim 8 **characterized in that** the size of the gap between the outer walls of the hollow elements and the inner wall of the shell varies from 1 to 15 mm.

14. The device according to claim 8 **characterized in that** a fan serves as a supply unit for the input air stream.

15. The device according to claim 8 **characterized in that** the supply unit for the input stream is additionally provided with a heater.

16. The device according to claim 8 **characterized in that** a disperser is provided with a tapered sleeve with a variable section intended to receive the inlet air and a filler neck to feed a powdered inorganic raw material.

17. The device according to claim 8 **characterized in that** the cooling device for the outgoing mixture is represented as a mixer.

18. The device according to claim 8 **characterized in that** the solid fraction separation unit is represented as a cyclone.
